# EUROPEAN PATENT SPECIFICATION

(11) **EP 2 093 464 B1**
(45) Date of publication and mention of the grant of the patent: **07.09.2011**
(21) Application number: 08003095.0
(22) Date of filing: 20.02.2008
(51) Int. Cl.: F16J 1/18, F16B 21/18

(54) **Bolt securing assembly and method for repairing a worn bolt securing assembly**
Bolzensicherungsanordnung und Verfahren zur Reparatur einer abgenutzten Bolzensicherungsanordnung
Ensemble de sécurisation de boulon et procédé de réparation d'un ensemble de sécurisation de boulon usé

(43) Date of publication of application: 26.08.2009
(73) Proprietor: GM Global Technology Operations LLC, Detroit, MI 48265-3000 (US)
(72) Inventor: Roos, Reinhard, 65527 Niedernhausen (DE)
(74) Representative: Kraenzmer, Martin

(56) References cited:
- DE-C- 463 684
- DE-C- 540 229
- DE-C- 710 596
- JP-A- 2005 106 085
- US-A- 1 415 422
- US-A- 4 692 079

## Description

The invention relates to a bolt securing assembly, by which a bolt is secured in axial direction in an opening. Particularly the invention relates to a piston bolt securing assembly of an automobile combustion engine, by which a piston bolt is secured in axial direction in an opening of a piston, so that a conrod may be connected to the piston via the piston bolt. The invention further relates to a method for repairing a worn bolt securing assembly in order to receive a bolt securing assembly according to the invention.

From DE 10 2006 013 904 A1 a piston bolt securing assembly of an automobile combustion engine is known, which comprises a piston with an opening, by which a piston bolt is secured. The opening of the piston comprises two grooves, whereby each groove receives a securing ring. The securing rings abut in axial direction to the piston bolt securing the piston bolt in axial direction. A conrod is connected to the piston via the piston bolt.

Such piston bolt securing assembly is also known from DE 540 229 C in combination with DE 463 684 C and JP 2005 106085 A.

It is a disadvantage of such kind of a bolt securing assembly, that the grooves and the securing rings are subjected to a high wear during operation.

It is an object of the invention to provide a use of a bolt securing assembly which comprises less wear during operation.

The solution of the object is achieved by a use of a bolt securing assembly comprising the features of claim 1.

The used bolt securing assembly according to the invention for securing a piston bolt in a piston comprises a bolt received by an opening. The opening may be provided by a piston for an automobile combustion engine. The bolt is secured by at least one securing member in axial direction. According to the invention the securing member comprises a spring force in axial direction. The securing member is received by a groove arranged inside the opening and/or the securing member is received by a bolt groove of the bolt. The securing member comprises a circular cross section. The material of the securing member comprises a width s in axial direction and the groove and/or the bolt groove comprises a width S in axial direction, whereby S is greater than s.The bolt securing assembly is used for the purpose to automatically compensate wear leading to a broadened groove, by the spring force of the securing member.

Due to the spring force in axial direction a clearance in axial direction can be compensated. At the same time an axial movement of the bolt in axial direction is still possible so that a thermal expansion of the bolt does not lead to a jamming and/or a sudden force in axial direction may be damped. Since an unnecessary movement is prevented but a necessary movement is allowed the wear of the bolt securing assembly is reduced. Further an additional axial clearance of the bolt due to wear occurring during operation can be automatically compensated by the spring force of the securing member. The spring force is particularly provided from the beginning on, so that it is not necessary to heat the securing member in order to provide the necessary elasticity. Particularly the securing member comprises a significant spring deflection for compensating the clearance fit in axial direction of the bolt inside the opening. Due to the compensation of the axial movement of the bolt a significant reduction of the knocking noise of a combustion engine comprising such kind of a bolt securing assembly is possible. Measurements show that the maximum volume of the knocking noise can be reduced by nearly 50%.

Due to the groove or bolt groove the securing member can be positioned on a defined place with respect to the opening or the bolt.

For instance when the securing member is a securing ring, the securing member comprises a mainly circular cross section, whereby the cross section comprises the diameter s. Due to the spring force in axial direction the securing member may be press fitted into the groove and/or the bolt groove, but a spring loaded axial clearance is still possible. The spring loaded axial clearance is defined by the difference S-s. The axial clearance S-s is particularly 0.5 mm ≤ S-s ≤ 2.5 mm, preferably 0.8 mm ≤ S-s ≤ 2.0 mm and most preferred 1.0 mm ≤ S-s ≤ 1.5 mm. The ratio r of S to s is particularly 1.0 < r ≤ 2.0, preferably 1.2 ≤ r ≤ 1.8 and most preferred 1.4 ≤ r ≤ 1.6.

In a preferred embodiment the securing member comprises an open securing ring. The securing ring comprises a first end and a second end, whereby the first end and the second end are arranged axially displaced to each other. Due to this displacement the spring force can be provided. Due to the inclined alignment of the securing ring the ends can be moved to each other in axial direction against the spring force. Such the securing member can be manufactured from a single piece of spring wire and/or by bending a common securing ring. This leads to a cost efficient securing member.

Particularly when the securing member is an open securing ring the securing member can be easily positioned into the groove or the bolt groove by compressing or expanding the securing ring in radial direction.

Further it is possible that the securing member abuts at least partial at a front face of the bolt. Thus, the securing member provides a stop in axial direction for the bolt. It is not necessary to provide the bolt with a bolt groove, so that the design and the manufacturing of the bolt may be facilitated.

The invention further relates to the use of a piston bolt securing assembly for an automobile combustion engine, which comprises a piston and a piston bolt. The piston and the piston bolt are arranged to a bolt securing assembly as previously described. This means that the piston comprises the opening, which receives the piston bolt. The piston bolt is secured by at least one securing member in axial direction. According to the invention the securing member comprises a spring force in axial direction. The piston bolt assembly may be further designed as previously described.

The invention further relates to the use of a piston bolt securing assembly as previously described in a combustion engine. The combustion engine particularly comprises a conrod connected to the piston via the piston bolt.

A method for repairing a worn bolt securing assembly is also described. According to this method a worn bolt securing assembly is provided, which comprises a bolt received by an opening, whereby the opening comprises a worn groove, by which a securing ring is received. The at least one securing ring is removed from the respective worn groove. A securing member is inserted into the worn groove, which comprises a spring force in axial direction. The securing member is received by a groove arranged inside the opening and/or the securing member is received by a bolt groove of the bolt. The securing member comprises a circular cross section. The material of the securing member comprises a width s in axial direction and the groove and/or the bolt groove comprises a width S in axial direction, whereby S is greater than s. Due to this method a bolt securing assembly as previously described is provided.

Particularly it is not necessary to change a worn piston or the like, but only to exchange the securing ring by a securing member, which comprises a spring force in axial direction. Thereby is used the insight that due to a thermal expansion of the bolt or due to a sudden force in axial direction to the bolt a wear would mainly lead to a broadened groove for the securing ring. The broadened width of groove can be automatically compensated by the spring deflection of the securing member, so that optimized operation conditions may be provided independently of the amount of the wear.

These and other aspects of the invention will be apparent from and elucidated with reference to a preferred embodiment described hereinafter.

In the drawings:
Fig. 1 is a schematic cross section of a bolt securing assembly according to the invention and
Fig. 2 is a schematic detailed view of fig. 1.

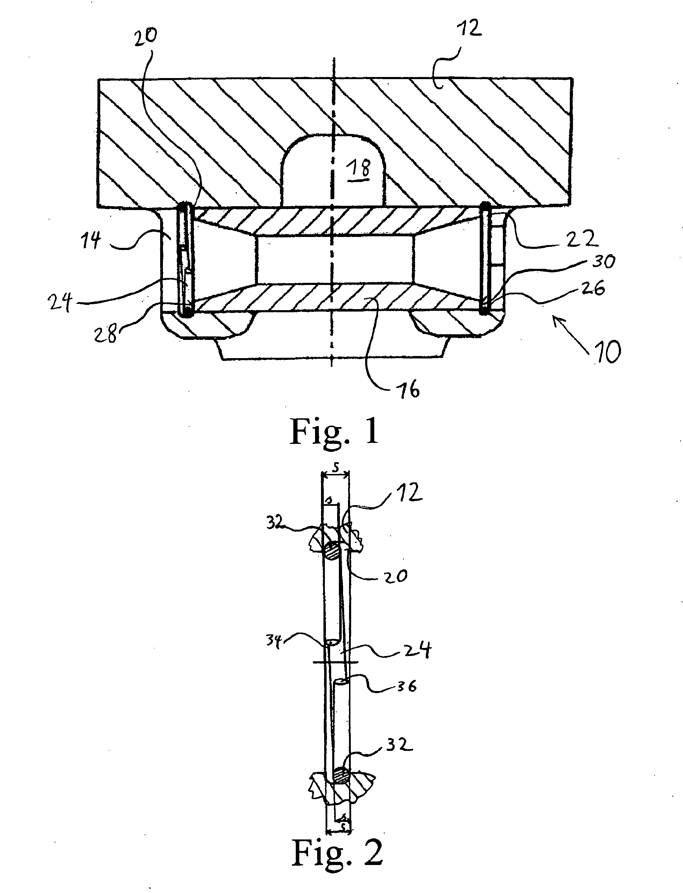

The bolt securing assembly 10 as illustrated in fig. 1 comprises a piston 12, which comprises an opening 14 by which a piston bolt 16 is received. In the illustrated embodiment the piston bolt 16 is mainly designed as hollow cylinder, which may be received in the middle by a not illustrated conrod connected to a crank. The piston 12 comprises a receiving space 18 for receiving the conrod without interference to the piston 12.

The opening 14 of the piston 12 comprises a first groove 20 and a second groove 22. By the first groove 20 a securing member 24 is received, while by the second groove 22 a common securing ring 26 is received. The securing member 24 abuts partially to a first front face 28 of the bolt 16. Since the securing member comprises a spring force in axial direction an axial clearance of the bolt 16 can be automatically compensated. The securing ring 26 abuts to a second front face 30 of the bolt and provides a stop for the bolt 16 in axial direction.

As illustrated in fig. 2 the securing member 24 is designed as an open securing ring, which comprises a circular cross section 32. The material of the securing member defined by the cross section 32 comprises in axial direction a width s, while the groove 20 comprises in axial direction a width S, which is significant greater than the width s of the securing member 24. Since the securing member 24 is designed as an open securing ring, the securing member comprises a first end 34 and a second end 36, which are displaced in axial direction to each other to provide the spring force.

### Reference signs

- 10: bolt securing assembly
- 12: piston
- 14: opening
- 16: bolt
- 18: receiving space
- 20: first groove
- 22: second groove
- 24: securing member
- 26: securing ring
- 28: first front face
- 30: second front face
- 32: cross section
- 34: first end
- 36: second end
- s: width of the securing member
- S: width of the first groove

## Claims

1. Use of a bolt securing assembly for securing a piston bolt (16) in a piston (12), comprising
a bolt (16) received by an opening (14) and
at least one securing member (24, 26) for securing the bolt (16) in axial direction,
whereby
the securing member (24) comprises a spring force in axial direction and
the securing member (24) comprises a circular cross section (32)
whereby the securing member (24) is received by a groove (20) arranged inside the opening (14) and/or the securing member (24) is received by a bolt groove of the bolt (16) and
whereby the material of the securing member (24) comprises a width s in axial direction and the groove (20) and/or the bolt groove comprises a width S in axial direction, whereby S is greater than s
for the purpose to automatically compensate wear leading to a broadened groove, by the spring force of the securing member.

2. Use of a bolt securing assembly according to claim 1 whereby the securing member (24) comprises an open securing ring, whereby the securing ring comprises a first end (34) and a second end (36) arranged axially displaced to each other for providing the spring force.

3. Use of a bolt securing assembly according to claim 1 whereby an axial clearance S-s is particularly 0.5 mm ≤ S-s ≤ 2.5 mm, preferably 0.8 mm ≤ S-s ≤ 2.0 mm and most preferred 1.0 mm ≤ S-s ≤ 1.5 mm.

4. Use of a bolt securing assembly according to anyone of claims 1 to 3 whereby the securing member (24) abuts at least partially at a front face (28) of the bolt (16).

5. Use of a bolt securing assembly according to anyone of claims 1 to 4 for an automobile combustion engine comprising a piston (12) and a piston bolt (16).

6. Use of a bolt securing assembly according to claim 5 in a combustion engine.

7. Use of a bolt securing assembly according to claim 6 whereby a conrod is provided connected to the piston (12) via the piston bolt (16).

## Patentansprüche

1. Verwendung einer Bolzensicherungsanordnung zum Sichern eines Kolbenbolzens (16) in einem Kolben (12), umfassend einen in einer Öffnung (14) aufgenommenen Bolzen (16) und mindestens ein Sicherungselement (24, 26) zum Sichern des Bolzens (16) in axialer Richtung,
wobei
das Sicherungselement (24) eine Federkraft in axialer Richtung und
einen kreisförmigen Querschnitt (32) aufweist,
in einer Nut (20) aufgenommen ist, die im Inneren der Öffnung (14) vorgesehen ist, und/oder in einer Bolzennut des Bolzens (16) aufgenommen ist, und
wobei das Material des Sicherungselementes (24) eine Breite s in axialer Richtung und die Nut (20) und/oder die Bolzennut eine Breite S in axialer Richtung aufweist und S größer als s ist,
zum Zweck des automatischen Ausgleichs von Verschleiß, der zu einer verbreiterten Nut führt, durch die Federkraft des Sicherungselementes.

2. Verwendung einer Bolzensicherungsanordnung nach Anspruch 1, wobei das Sicherungselement (24) einen offenen Sicherungsring umfasst, der ein erstes Ende (34) und ein zweites Ende (36) aufweist, die axial zueinander versetzt angeordnet sind, um die Federkraft bereitzustellen.

3. Verwendung einer Bolzensicherungsanordnung nach Anspruch 1, wobei ein Axialspiel S-s von insbesondere 0,5 mm ≤ S-s ≤ 2,5 mm, vorzugsweise 0,8 mm ≤ S-s ≤ 2,0 mm, und besonders bevorzugt 1,0 mm ≤ S-s ≤ 1,5 mm vorliegt.

4. Verwendung einer Bolzensicherungsanordnung nach einem der Ansprüche 1 bis 3, wobei das Sicherungselement (24) zumindest teilweise gegen eine Vorderfläche (28) des Bolzens (16) anstößt.

5. Verwendung einer Bolzensicherungsanordnung nach einem der Ansprüche 1 bis 4 für einen Kraftfahrzeugverbrennungsmotor mit einem Kolben (12) und einem Kolbenbolzen (16).

6. Verwendung einer Bolzensicherungsanordnung nach Anspruch 5 in einem Verbrennungsmotor.

7. Verwendung einer Bolzensicherungsanordnung nach Anspruch 6, wobei eine über den Kolbenbolzen (16) mit dem Kolben (12) verbundene Pleuelstange vorgesehen ist.

## Revendications

1. Utilisation d'un ensemble de sécurisation de boulon pour sécuriser un boulon à piston (16) dans un piston (12), comprenant
un boulon (16) reçu par une ouverture (14) et
au moins une pièce de sécurisation (24, 26) pour sécuriser le boulon (16) en direction axiale,
où
la pièce de sécurisation (24) comprend une tension de ressort en direction axiale et
la pièce de sécurisation (24) comprend une section transversale circulaire (32)
où la pièce de sécurisation (24) est reçue par une rainure (20) disposée à l'intérieur de l'ouverture (14) et/ou la pièce de sécurisation (24) est reçue par une rainure de boulon du boulon (16) et
où le matériel de la pièce de sécurisation (24) comprend une largeur s en direction axiale et la rainure (20) et/ou la rainure du boulon comprend une largeur S en direction axiale, où S est supérieur à s dans le but de compenser automatiquement l'usure menant à une rainure élargie, par la tension du ressort de la pièce de sécurisation.

2. Utilisation d'un ensemble de sécurisation de boulon selon la revendication 1 où la pièce de sécurisation (24) comprend un anneau de sécurisation ouvert, où l'anneau de sécurisation comprend une première extrémité (34) et une deuxième extrémité (36) disposée de façon axiale déplacée l'une de l'autre pour fournir la tension de ressort.

3. Utilisation d'un ensemble de sécurisation de boulon selon la revendication 1 où un jeu axial S-s est en particulier 0,5 mm ≤ S - s ≤ 2,5 mm, de préférence 0,8 mm ≤ S - s ≤ 2,0 mm et surtout 1,0 mm ≤ S - s ≤ 1,5 mm.

4. Utilisation d'un ensemble de sécurisation de boulon selon n'importe quelle revendication 1 à 3 où la pièce de sécurisation (24) est contiguë au moins partiellement à une face avant (28) du boulon (16).

5. Utilisation d'un ensemble de sécurisation de boulon selon n'importe quelle revendication 1 à 4 pour un moteur à combustion automobile comprenant un piston (12) et un boulon à piston (16).

6. Utilisation d'un ensemble de sécurisation de boulon selon la revendication 5 dans un moteur à combustion.

7. Utilisation d'un ensemble de sécurisation de boulon selon la revendication 6 où une bielle est fournie, connectée au piston (12) via le boulon à piston (16).
